# FASCICULE DE BREVET EUROPEEN

(11) **EP 0 591 029 B1**
(45) Date de publication et mention de la délivrance du brevet: **12.06.1996**
(21) Numéro de dépôt: 93402293.0
(22) Date de dépôt: 20.09.1993
(51) Int. Cl.: B62D 1/18, B62D 1/19

(54) **Ensemble de colonne de direction réglable en position pour véhicule automobile**
Einstellbare Lenksäuleneinheit für ein Kraftfahrzeug
Adjustable steering column assembly for a motor vehicle

(30) Priorité: 28.09.1992 FR 9211545
(43) Date de publication de la demande: 06.04.1994
(73) Titulaire: ECIA - EQUIPEMENTS ET COMPOSANTS POUR L'INDUSTRIE AUTOMOBILE, F-25400 Audincourt (FR)
(72) Inventeur: Hoblingre, André, F-25700 Valentigney (FR); Passebecq, Ghislain, F-25700 Valentigney (FR); Salez, Jean-Philippe, F-25700 Valentigney (FR)
(74) Mandataire: Habasque, Etienne Joel Jean-François

(56) Documents cités:
- EP-A- 0 444 994
- EP-A- 0 477 509
- DE-A- 3 737 164
- FR-A- 2 255 204
- US-A- 4 691 587

## Description

La présente invention concerne un ensemble de colonne de direction réglable en position, notamment pour véhicule automobile.

Plus particulièrement, l'invention se rapporte aux ensembles de colonne de direction à réglage dit électrique, c'est à dire par exemple par l'intermédiaire de moyens à motoréducteurs électriques, par opposition aux ensembles de colonne de direction à réglage dit manuel.

Ces ensembles de colonne de direction à réglage dit électrique, permettent à un utilisateur de régler la position angulaire et la position axiale d'un volant de direction, par exemple par action sur des organes de commande contrôlant le fonctionnement des motoréducteurs de déplacement de l'ensemble de colonne et donc du volant.

On connaît déjà dans l'état de la technique, par exemple du document EP-A-0 444 994 au nom de la Demanderesse, un tel ensemble de colonne de direction qui comporte une structure de support de colonne munie de deux flasques latéraux, à peu près verticaux, et un arbre de direction comportant deux portions, dont l'une porte le volant de direction et dont l'autre est reliée au reste du mécanisme de direction du véhicule, et montées télescopiques l'une dans l'autre pour permettre le réglage de la position axiale du volant, cet arbre étant monté rotatif dans un corps de colonne susceptible de pivoter autour d'un axe à peu près horizontal entre les deux flasques de la structure de support, pour permettre le réglage de la position angulaire du volant.

Ce corps comporte deux portions déplaçables à coulissement l'une dans l'autre, dont l'une comporte des moyens de guidage en rotation et de blocage axial de la portion d'arbre portant le volant et dont l'autre est articulée entre les flasques de la structure de support.

Cet ensemble comporte également des moyens de réglage de position comprenant un motoréducteur électrique de réglage de la position angulaire du volant et un motoréducteur électrique de réglage de la position axiale de celui-ci, qui sont adaptés pour coopérer d'une part avec la structure de support et d'autre part, avec la portion de corps associée à la portion d'arbre portant le volant, pour permettre le réglage des positions angulaire et axiale de celui-ci.

Le pilotage de ces motoréducteurs électriques peut être assuré par exemple par l'utilisateur, par l'intermédiaire d'organes de commande disposés sur le volant de direction ou sur le tableau de bord du véhicule ou par une unité de commande comprenant des moyens de mémorisation de ces positions.

Le déplacement axial de la portion de corps associée à la portion d'arbre portant le volant est assuré, dans l'ensemble décrit dans ce document antérieur, par l'intermédiaire d'un mécanisme à pignon-crémaillère. Le pignon est entraîné en rotation dans un sens ou dans l'autre par l'un des motoréducteurs électriques pour provoquer un déplacement linéaire de la crémaillère, cette crémaillère étant également reliée à la portion correspondante de corps, pour permettre le réglage de la position axiale de celle-ci et donc du volant.

Le déplacement angulaire de cette portion de corps et donc du volant, est assuré par l'intermédiaire de l'autre motoréducteur électrique, comportant également un pignon de sortie adapté pour coopérer avec une crémaillère de déplacement de moyens de suspension de cette portion de corps de colonne, le long de rampes inclinées des flasques latéraux de la structure de support, pour permettre un réglage de la position angulaire de cette portion de corps et donc du volant.

Cependant, cette configuration, et en particulier celle des moyens de réglage de la position angulaire du volant, sont relativement complexes, car ce réglage angulaire de position nécessite d'une part la conversion d'un mouvement de rotation de l'arbre de sortie du motoréducteur en déplacement linéaire de la crémaillère et d'autre part, la conversion du déplacement linéaire de la crémaillère en déplacement angulaire de la portion correspondante de corps.

On connaît également, par exemple du document US-A-4 691 587, un autre exemple de réalisation d'un ensemble de colonne de direction à réglage dit électrique. Dans cet ensemble, l'arbre de direction est disposé dans un corps de colonne fixé sur une structure de support intermédiaire comportant des moyens à motoréducteur de réglage de la position axiale de ce corps.

Cette structure de support intermédiaire est montée déplaçable angulairement par rapport à une structure de support reliée au reste du véhicule, grâce à un levier de manoeuvre articulé sur la structure de support et adapté pour coopérer avec des moyens de déplacement dont le fonctionnement est contrôlé par d'autres moyens à motoréducteur de réglage, également articulés sur la structure de support.

Cependant, on conçoit que cette configuration est relativement complexe, encombrante et présente un poids et un prix de revient extrêmement élevés.

Le but de l'invention est donc de résoudre ces problèmes en proposant un ensemble de colonne de direction à réglage dit électrique, qui soit simple, fiable, dont l'encombrement et le poids soient les plus réduits possible, tout en permettant un réglage précis en positions angulaire et axiale du volant.

A cet effet, l'invention a pour objet un ensemble de colonne de direction réglable en position, notamment pour véhicule automobile, du type comportant une structure de support de colonne munie de deux flasques latéraux, à peu près verticaux, un arbre de direction comportant deux portions, dont l'une porte le volant de direction et dont l'autre est reliée au reste du mécanisme de direction du véhicule et montées télescopiques l'une dans l'autre, pour permettre le réglage de la position axiale du volant, cet arbre étant monté rotatif dans un corps de colonne susceptible de pivoter autour d'un axe à peu près horizontal entre les deux flasques de la structure de support, pour permettre le réglage de la position angulaire du volant, ce corps comportant deux portions déplaçables à coulissement l'une dans l'autre, dont l'une comporte des moyens de guidage en rotation et de blocage axial de la portion d'arbre portant le volant et dont l'autre est articulée entre les flasques de la structure de support et des moyens de réglage en position comportant un motoréducteur électrique de réglage de la position angulaire du volant et un motoréducteur électrique de réglage de la position axiale du volant, adaptés pour coopérer d'une part, avec la structure de support et d'autre part, avec la portion de corps associée à la portion d'arbre portant le volant, pour régler les positions angulaire et axiale du volant, caractérisé en ce que les moyens de réglage de position comprennent en outre une structure de suspension de ladite portion de corps associée à la portion d'arbre portant le volant, articulée autour d'un axe à peu près horizontal sur la structure de support et déplaçable angulairement sous la commande de moyens de déplacement coopérant avec le motoréducteur électrique de réglage de la position angulaire du volant, pour régler la position angulaire de la portion de corps associée à la portion d'arbre portant le volant, cette portion de corps et cette structure de suspension étant déplaçables angulairement et/ou en translation l'une par rapport à l'autre, pour permettre un réglage angulaire et/ou axial de la position de la portion correspondante de corps et donc du volant, par activation de l'un et/ou de l'autre des motoréducteurs.

L'invention sera mieux comprise à l'aide de la description qui va suivre, donnée uniquement à titre d'exemple et faite en se référant aux dessins annexés, sur lesquels :
- la Fig.1 représente une vue de dessus partiellement en coupe d'un ensemble de colonne de direction selon l'invention;
- les Fig.2 et 3 représentent respectivement des vues de côté et de dessus de moyens de réglage de la position angulaire d'un volant, entrant dans la constitution d'un ensemble selon l'invention;
- la Fig.4 représente une vue en coupe prise selon la ligne IV-IV de la Fig.1, illustrant l'implantation de motoréducteurs électriques de réglage, entrant dans la constitution d'un ensemble de l'invention;
- la Fig.5 représente une vue en coupe prise selon la ligne V-V de la Fig.1, illustrant l'implantation de moyens de réglage de position, entrant dans la constitution d'un ensemble selon l'invention;
- la Fig.6 représente une vue en coupe prise selon la ligne VI-VI de la Fig.1, illustrant des moyens d'articulation d'un corps de colonne entre des flasques d'une structure de support, entrant dans la constitution d'un ensemble selon l'invention; et
- la Fig.7 représente une vue schématique en perspective d'un ensemble selon l'invention, illustrant l'implantation des différents moyens de réglage de position.

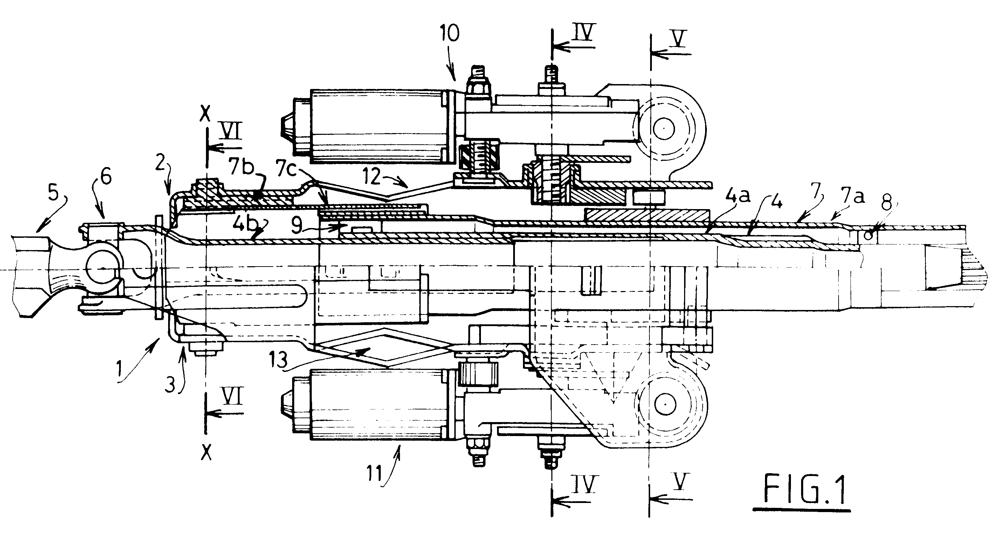

Ainsi qu'on peut le voir sur ces Figs et en particulier sur la Fig.1, l'ensemble de colonne de direction selon l'invention présente une configuration générale qui présente certaines analogies avec celle de l'ensemble décrit dans le document EP-A-0 444 994 mentionné précédemment.

En effet, cet ensemble de colonne de direction comporte une structure de support de colonne, désignée de façon générale par la référence 1, munie de deux flasques latéraux, à peu près verticaux, désignés par les références 2 et 3.

Par ailleurs, cet ensemble de colonne comporte un arbre de direction désigné par la référence 4, comportant deux portions 4a et 4b, dont l'une 4a, est adaptée pour recevoir le volant de direction (non représenté) et dont l'autre 4b, est reliée au reste 5 du mécanisme de direction du véhicule par exemple par l'intermédiaire d'une articulation 6 à la cardan.

Ces deux portions d'arbre 4a et 4b sont montées télescopiques l'une dans l'autre, pour permettre le réglage de la position axiale du volant, comme cela sera décrit plus en détail par la suite.

Par ailleurs, cet arbre 4 est monté rotatif dans un tube-enveloppe qui sera également appelé par la suite corps de colonne, 7, susceptible de pivoter autour d'un axe X-X à peu près horizontal, entre les deux flasques 2 et 3 de la structure de support 1, pour permettre le réglage de la position angulaire du volant.

Ce corps comporte également deux portions déplaçables à coulissement l'une dans l'autre, dont l'une, désignée par la référence 7a, comporte des moyens 8,9 de guidage en rotation et de blocage axial de la portion d'arbre 4a portant le volant et dont l'autre, désignée par la référence 7b, est articulée entre les flasques 2 et 3 de la structure de support.

On notera que cette portion de corps 7b articulée entre les flasques de la structure de support 1 peut être constituée par un bloc-palier de guidage et d'articulation de l'autre portion de corps, comme cela sera décrit plus en détail par la suite.

Les moyens 8,9 de guidage en rotation et de blocage axial de la portion d'arbre portant le volant dans la portion correspondante 7a de corps de colonne, peuvent être constitués par tous moyens appropriés tels que par exemple un roulement à billes et un roulement à aiguilles, respectivement.

Par ailleurs, cet ensemble de colonne comporte également des moyens de réglage de position comprenant un premier motoréducteur électrique 10 de réglage de la position axiale du volant et un second motoréducteur électrique 11 de réglage de la position angulaire du volant, ces motoréducteurs étant adaptés pour coopérer d'une part avec la structure de support 1 et d'autre part avec la portion 7a de corps associée à la portion d'arbre 4a portant le volant, pour assurer le réglage en position de cette portion de corps et donc du volant.

Ces moyens à motoréducteurs de réglage en position sont par exemple irréversibles, c'est à dire que la position du volant ne peut pas être modifiée par action sur le volant.

Dans l'exemple de réalisation représenté sur cette Fig.1, les motoréducteurs 10 et 11 sont disposés en regard l'un de l'autre, chacun sur l'un des flasques 2,3 respectivement de la structure de support et sont fixés sur la face de ceux-ci opposée à celle en regard du corps de colonne, par tous moyens appropriés.

Par ailleurs, ces motoréducteurs sont disposés à proximité de l'extrémité des flasques 2 et 3, la plus proche du volant de direction, tandis que le corps de colonne 7 est articulé à proximité de l'autre extrémité des flasques.

Chaque flasque peut alors comporter entre ces deux extrémités des moyens d'absorption d'énergie de choc désignés par les références générales 12 et 13. Ces moyens d'absorption d'énergie de choc peuvent être constitués par exemple par des zones de déformation préférentielle de ces flasques.

Le corps de colonne 7, et plus particulièrement la portion de corps 7a dans le mode de réalisation représenté sur cette Fig.1, peuvent également comporter de tels moyens d'absorption d'énergie de choc.

Dans l'exemple illustré sur cette figure 1, la portion de corps de colonne 7a est en effet divisée en deux tronçons montés télescopiques à force, en 7c, l'un dans l'autre, en regard des moyens d'absorption d'énergie de choc des flasques.

Ces différents moyens d'absorption d'énergie permettent à l'ensemble de colonne de se déformer lorsque le conducteur du véhicule par exemple, vient heurter le volant de direction lors d'un accident de circulation.

Les moyens de réglage de la position axiale de la portion de corps correspondante 7a et donc du volant peuvent être constitués par des moyens présentant une configuration analogue à celle des moyens correspondants décrits et représentés dans le document EP-A-0 444 994 mentionné précédemment.

En effet, ces moyens peuvent être constitués par un pignon de sortie du motoréducteur électrique, adapté pour coopérer avec une crémaillère articulée autour de ce pignon et reliée de façon articulée à la portion correspondante du corps.

Le réglage axial en position du volant est alors assuré par déplacement de cette portion de corps et de la portion d'arbre portant le volant, respectivement, dans l'autre portion de corps et par rapport à l'autre portion d'arbre.

En effet, on conçoit que si l'on provoque un déplacement linéaire de la crémaillère et donc de la portion de corps 7a, celle-ci se déplace à coulissement dans la portion de corps 7b, c'est à dire dans le bloc-palier de guidage et d'articulation de celle-ci sur les flasques de la structure de support.

Par ailleurs, du fait de la présence des moyens de blocage axial 9 de la portion d'arbre portant le volant 4a dans la portion correspondante de corps 7a, cette portion d'arbre est également entraînée en déplacement linéaire et coulisse par exemple autour de l'autre portion d'arbre 4b qui est fixe.

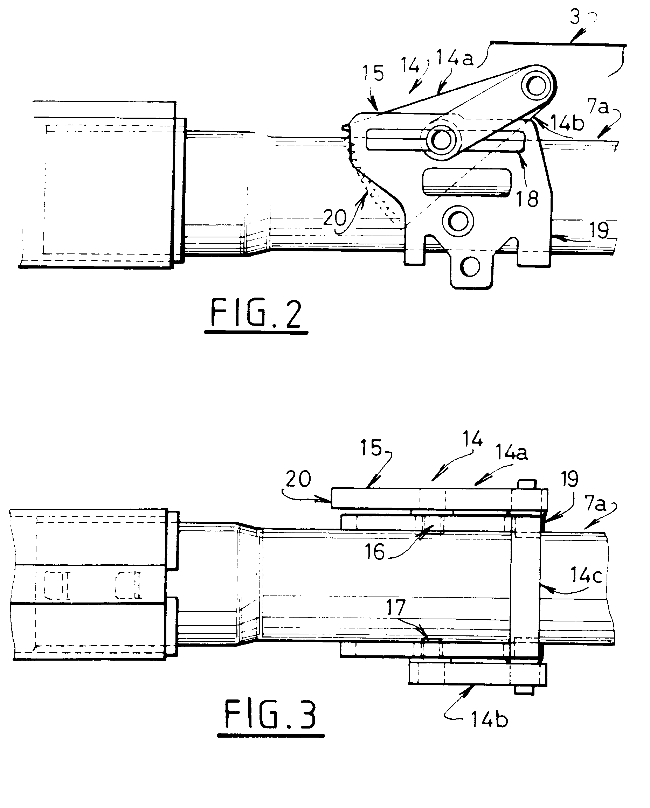

Comme on peut le voir plus clairement sur les figures 2 et 3, les moyens de réglage de la position angulaire du volant comprennent quant à eux une structure de suspension 14 de la portion de corps 7a associée à la portion d'arbre portant le volant, à la structure de support 1.

Cette structure de suspension 14 est articulée autour d'un axe à peu près horizontal sur la structure de support 1 et plus particulièrement sur au moins l'un des flasques par exemple 3 de celle-ci.

Cette structure de suspension 14 est montée déplaçable angulairement sous la commande de moyens de déplacement 15 coopérant avec le motoréducteur électrique 11 de réglage de la position angulaire du volant, pour régler la position angulaire de cette portion de corps 7a associée à la portion d'arbre 4a portant le volant.

Cette portion de corps 7a et cette structure de suspension 14 sont déplaçables non seulement angulairement, mais également en translation l'une par rapport à l'autre, pour permettre un réglage angulaire et/ou un réglage axial de la position de la portion correspondante de corps et donc du volant, par activation de l'un et/ou de l'autre des motoréducteurs de réglage.

En effet, on conçoit que pour permettre un réglage axial et un réglage angulaire de la position du volant, il est nécessaire de permettre une translation entre la portion de corps de colonne 7a et cette structure de suspension 14 articulée sur la structure de support.

Dans l'exemple de réalisation représenté sur ces figures 2 et 3, cette structure de suspension se présente sous la forme générale d'une monture en U interposée entre la portion 7a du corps et les flasques de la structure de support 1 et comportant deux bras de manoeuvre 14a, 14b disposés de part et d'autre de cette portion de corps 7a et reliés à une tige de manoeuvre 14c articulée entre les deux flasques de la structure de support. Chaque bras de manoeuvre comporte un organe 16, 17 de suspension de la portion correspondante de corps.

Bien entendu, un seul bras de manoeuvre articulé sur l'un des flasques de la structure de support, peut également être utilisé en tant que structure de suspension.

Dans l'exemple de réalisation décrit en regard des figures 2 et 3, chaque organe de suspension 16,17 est monté coulissant dans une lumière, par exemple 18, de la portion correspondante de corps 7a et plus particulièrement d'une ferrure 19 de celle-ci.

Bien entendu également, ces organes de suspension 16 et 17 peuvent être formés par une tige de suspension s'étendant entre les deux bras de manoeuvre 14a et 14b et montée déplaçable à coulissement dans une même lumière de la ferrure de la portion correspondante de ce corps.

La tige de manoeuvre 14c est articulée à chacune de ses extrémités sur le flasque correspondant de la structure de support, par tous moyens appropriés, comme par exemple dans des canons de pivotement venus de matière avec ces flasques.

Par ailleurs, l'un des bras de manoeuvre et par exemple le bras de manoeuvre 14a représenté sur la Fig.3, comporte une portion de couronne dentée 20, formant moyens de déplacement et adaptée pour coopérer avec le pignon de sortie par exemple du moto-réducteur 11 représenté sur la figure 1, pour provoquer selon le sens de rotation de ce motoréducteur, c'est à dire selon le sens d'alimentation de celui-ci, un déplacement angulaire vers le haut ou vers le bas de la structure de suspension 14 et donc de la portion de corps correspondante 7a et du volant.

Ainsi qu'on l'a indiqué précédemment, cette structure de suspension 14 peut être disposée entre les flasques de la structure de support 1 et le corps de colonne 7.

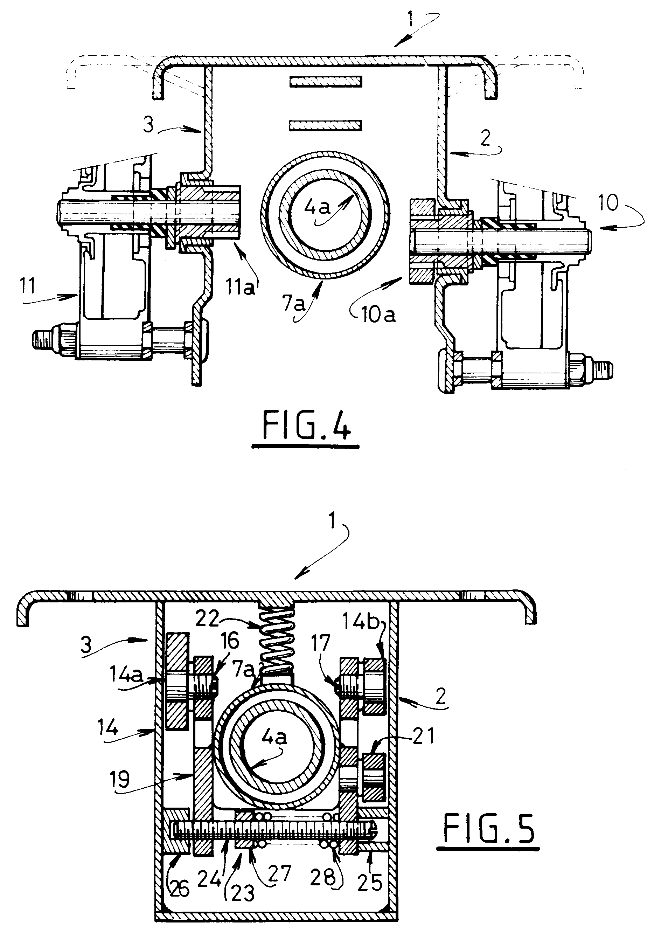

Dans ce cas et comme on peut le voir sur les figures 4 et 5, les pignons de sortie 10a et 11a des motoréducteurs 10 et 11 peuvent faire saillie sur la face du flasque correspondant 2 ou 3, opposée à celle sur laquelle est fixé le motoréducteur 10 ou 11 correspondant, pour pouvoir coopérer avec la crémaillère de réglage de la position axiale et avec la couronne dentée de réglage de la position angulaire, respectivement, de la portion correspondante de corps.

On voit en effet sur ces figures que le pignon de sortie 11a du motoréducteur 11 de réglage de la position angulaire du volant peut être adapté pour coopérer avec la portion de couronne dentée prévue à l'une des extrémités du bras de manoeuvre 14a pour permettre le réglage angulaire de position, tandis que le pignon de sortie 10a du moto-réducteur 10 de réglage de la position axiale de ce volant, peut être adapté pour coopérer avec une crémaillère 21 de déplacement axial, également reliée de manière articulée à la ferrure 19 de cette portion de corps de colonne, pour permettre le réglage axial de la position de cette portion de corps et donc du volant.

Bien entendu, l'axe d'articulation de cette structure de suspension peut être disposé au-dessus ou au-dessous de la portion de corps correspondante, dans le cas où une tige d'articulation et une tige de suspension sont utilisées.

Cependant, dans le cas où un seul bras de manoeuvre est utilisé en tant que structure de suspension, cet axe peut être disposé en n'importe quel endroit approprié de ces flasques.

Bien entendu également, d'autres moyens de déplacement de cette structure de suspension peuvent être envisagés.

Par ailleurs, il peut également être prévu des moyens de mise sous contrainte de cette portion de corps de colonne 7a dans la structure de support 1 pour rattraper les différents jeux d'assemblage et de fonctionnement de l'ensemble de colonne.

C'est ainsi par exemple qu'il peut être prévu des moyens élastiques 22 dont une extrémité est en appui sur le corps de colonne et plus particulièrement sur la portion de corps 7a et dont l'autre extrémité est en appui sur la partie supérieure de la structure de support 1, pour rattraper les jeux correspondants.

Par ailleurs, d'autres moyens élastiques, tels que des moyens 23 représentés sur cette figure, peuvent également être prévus pour obtenir un rattrapage des jeux latéraux entre cette portion de corps 7a et les flasques 2 et 3 de la structure de support et obtenir un bon guidage de cette portion de corps lors de ses déplacements dans la structure de support.

Ces moyens comprennent par exemple une tige filetée 24 s'étendant dans des trous correspondants de la ferrure 19, et dont les extrémités sont munies de patins de guidage 25 et 26 de cette portion de corps, en appui sur les flasques 2 et 3 de la structure de support, la tige filetée 24 comportant un écrou 27 de réglage du niveau de mise sous contrainte d'un ressort 28 dont une extrémité est en appui sur cet écrou et dont l'autre est en appui sur la ferrure de cette portion de corps, pour rattraper ces jeux latéraux.

Bien entendu, d'autres modes de réalisation de ces moyens de rattrapage de jeux peuvent être envisagés.

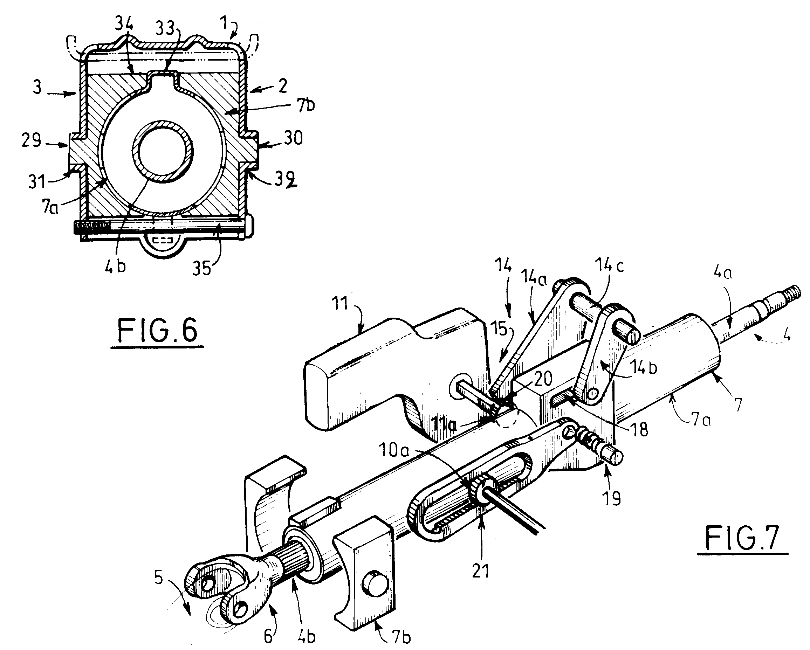

Sur la figure 6, on a représenté un exemple de réalisation de la portion de corps de colonne 7b articulée entre les flasques 2 et 3.

Cette portion de corps de colonne peut, ainsi que cela a été mentionné précédemment, se présenter sous la forme d'un bloc-palier de guidage et d'articulation de l'autre portion de corps, présentant sur ses faces latérales des parties en saillie 29 et 30 articulées dans des canons de pivotement 31 et 32 des flasques 2 et 3, découlant de celui décrit dans la demande de brevet Français n° 92 02 594 déposée le 4 mars 1992, au nom de la Demanderesse, et correspondant à la demande EP-A-0559523 publiée le 08.09.93.

En effet, ce bloc-palier peut être formé par un coussinet de montage sans jeu de l'extrémité correspondante de l'autre portion de corps 7a dans la structure de fixation 1 et plus particulièrement dans un étrier de celle-ci, formé par la partie supérieure de la structure de support 1 et les flasques 2 et 3 de celle-ci et présentant une section de forme générale en U.

Des moyens de butée complémentaires, formés par exemple par une partie en saillie 33 de la portion de corps 7a et une rainure de guidage 34 de ce coussinet 7b, peuvent être utilisés pour éviter tout déplacement angulaire de cette portion de corps 7a par rapport au coussinet dans le cas par exemple où des moyens de verrouillage en position sont associés à la portion d'arbre 4a associée à la portion de corps 7a.

Enfin, des moyens 35 de mise sous contrainte de l'ensemble étrier-coussinet-corps, peuvent également être prévus pour assurer un rattrapage des jeux et un bon guidage de la portion de corps.

Ces moyens de mise sous contrainte peuvent par exemple être formés par une vis de rapprochement des flasques 2 et 3.

Bien entendu, les autres caractéristiques du bloc-palier mentionnée dans le document 92 02 594 peuvent également être appliquée à ce bloc-palier 7b.

L'implantation des différents moyens de réglage de position est illustrée de façon schématique sur la Fig.7.

On conçoit alors que l'ensemble de la colonne de direction selon l'invention présente un certain nombre d'avantages au niveau de la simplicité de sa configuration et de son fonctionnement par rapport aux différents ensembles connus dans l'état de la technique.

Cette structure permet un gain de poids et un encombrement réduit tout en autorisant des réglages précis et fiables de l'ensemble de colonne.

## Revendications

1. Ensemble de colonne de direction réglable en position, notamment pour véhicule automobile, du type comportant une structure de support de colonne (1) munie de deux flasques latéraux (2,3), à peu près verticaux, un arbre de direction (4) comportant deux portions (4a,4b), dont l'une (4a) porte le volant de direction et dont l'autre (4b) est reliée au reste (5) du mécanisme de direction du véhicule et montées télescopiques l'une dans l'autre, pour permettre le réglage de la position axiale du volant, cet arbre (4) étant monté rotatif dans un corps de colonne (7) susceptible de pivoter autour d'un axe (X-X) à peu près horizontal entre les deux flasques de la structure de support (1) pour permettre le réglage de la position angulaire du volant, ce corps comportant deux portions (7a,7b) déplaçables à coulissement l'une dans l'autre, dont l'une (7a) comporte des moyens (8,9) de guidage en rotation et de blocage axial de la portion d'arbre (4a) portant le volant et dont l'autre (7b) est articulée entre les flasques (2,3) de la structure de support et des moyens de réglage en position comportant un motoréducteur électrique (11) de réglage de la position angulaire du volant et un motoréducteur électrique (10) de réglage de la position axiale du volant, adaptés pour coopérer d'une part avec la structure de support (1) et d'autre part, avec la portion de corps (7a) associée à la portion d'arbre (4a) portant le volant, pour régler les positions angulaire et axiale du volant, caractérisé en ce que les moyens de réglage comprennent en outre une structure de suspension (14) de ladite portion de corps (7a) associée à la portion d'arbre (4a) portant le volant, articulée autour d'un axe à peu près horizontal sur la structure de support (1) et déplaçable angulairement sous la commande de moyens de déplacement (15) coopérant avec le motoréducteur électrique (11) de réglage de la position angulaire du volant, pour régler la position angulaire de la portion de corps associée à la portion d'arbre portant le volant, cette portion de corps (7a) et cette structure de suspension (14) étant déplaçables angulairement et/ou en translation l'une par rapport à l'autre, pour permettre un réglage angulaire et/ou axial de la position de la portion correspondante du corps et donc du volant, par activation de l'un et/ou de l'autre desdits motoréducteurs.

2. Ensemble selon la revendication 1, caractérisé en ce que la structure de suspension (14) est articulée sur au moins l'un des flasques (2,3) de la structure de support.

3. Ensemble selon la revendication 2, caractérisé en ce que la structure de suspension (14) comporte au moins un bras de suspension (14a) articulé sur ledit flasque (3) et muni d'un organe de suspension (16) de la portion correspondante du corps (7a).

4. Ensemble selon la revendication 2 ou 3, caractérisé en ce que la structure de suspension comporte une monture de forme générale en U (14) présentant deux bras de manoeuvre (14a,14b) reliés à une tige de manoeuvre (14c) articulée entre les deux flasques (2,3) de la structure de support, chaque bras de manoeuvre comportant un organe de suspension (16,17) de la portion correspondante du corps.

5. Ensemble selon l'une quelconque des revendications 3 ou 4, caractérisé en ce que le ou chaque organe de suspension (16,17) est monté coulissant dans une lumière (18) de la portion correspondante du corps.

6. Ensemble selon la revendication 4 ou 5, caractérisé en ce que les organes de suspension (16,17) des bras de manoeuvre sont formés par une tige de suspension s'étendant entre les bras et montée coulissante dans la même lumière de la portion correspondante du corps (7a).

7. Ensemble selon l'une quelconque des revendications précédentes, caractérisé en ce que la structure de suspension est disposée entre la structure de support (1) et la portion correspondante du corps (7a).

8. Ensemble selon la revendication 7, caractérisé en ce que le motoréducteur (11) de réglage de la position angulaire est fixé sur la face d'un flasque (3), opposée à celle en regard du corps et en ce qu'une portion des moyens de déplacement traverse le flasque correspondant.

9. Ensemble selon l'une quelconque des revendications précédentes, caractérisé en ce que les moyens de déplacement comprennent un pignon de sortie (11a) du motoréducteur (11), adapté pour coopérer avec une portion de couronne dentée (20) de déplacement angulaire de la structure de suspension (14).

10. Ensemble selon la revendication 3,4,5 ou 6 et 9, caractérisé en ce que la portion de couronne dentée (20) est prévue à l'extrémité du ou de l'un des bras de manoeuvre (14a).

11. Ensemble selon l'une quelconque des revendications précédentes, caractérisé en ce que le motoréducteur (11) de réglage de la position angulaire du volant est fixé sur l'un des flasques (3), tandis que le motoréducteur (10) de réglage de la position axiale du volant est fixé en regard, sur l'autre flasque (2) de la structure de support.

12. Ensemble selon la revendication 11, caractérisé en ce que le motoréducteur (10) de réglage de la position axiale du volant est fixé sur la face du flasque correspondant, opposée à celle en regard du corps et en ce que les moyens de réglage de la position axiale du volant comportent un pignon (10a) de sortie du motoréducteur (10), faisant saillie sur la face du flasque correspondant, opposée à celle sur laquelle est fixé le motoréducteur et adapté pour coopérer avec une crémaillère (21) articulée autour de ce pignon (10a), disposée entre le flasque correspondant (2) et la portion correspondante de corps (7a) et reliée à cette portion de corps, pour permettre le réglage de la position axiale de celle-ci et donc du volant.

13. Ensemble selon l'une quelconque des revendications précédentes, caractérisé en ce que les motoréducteurs (10,11) de réglage en positions angulaire et axiale du volant, sont disposés à proximité de l'extrémité des flasques la plus proche du volant, le corps de colonne étant articulé à proximité de l'autre extrémité des flasques (2,3) et en ce que les flasques (2,3) comportent entre leurs deux extrémités des moyens (12,13) d'absorption d'énergie de choc.

14. Ensemble selon la revendication 13, caractérisé en ce que les moyens d'absorption d'énergie de choc comprennent des zones (12,13) de déformation préférentielle de ces flasques.

15. Ensemble selon la revendication 13 ou 14, caractérisé en ce que le corps de colonne (7) comporte des moyens d'absorption d'énergie de choc.

16. Ensemble selon la revendication 15, caractérisé en ce que les moyens d'absorption d'énergie de choc du corps, sont formés par deux tronçons télescopiques (en 7c) à force l'un dans l'autre de la portion de corps (7a) associée à la portion d'arbre portant le volant.

17. Ensemble selon l'une quelconque des revendications précédentes, caractérisé en ce qu'il comporte des moyens de mise sous contrainte de la portion (7a) de corps de colonne associée à la portion d'arbre portant le volant (4a), dans la structure de support (1), pour rattraper les jeux d'assemblage et de fonctionnement.

18. Ensemble selon la revendication 17, caractérisé en ce que les moyens de mise sous contrainte comprennent des moyens élastiques (22) interposés entre la partie supérieure de la structure de support (1) et cette portion de corps (7a).

19. Ensemble selon la revendication 17 ou 18, caractérisé en ce que les moyens de mise sous contrainte comprennent des patins (25,26) de guidage de cette portion de corps, sollicités en appui contre les flasques (2,3) de la structure de support, par l'intermédiaire de moyens élastiques (28).

20. Ensemble selon la revendication 19, caractérisé en ce que les patins de guidage (25,26) sont disposés aux extrémités d'une tige filetée (24) reliée à ladite portion de corps et sur laquelle est prévu un écrou (27) de mise sous contrainte d'un ressort (28) dont une extrémité est en appui sur cet écrou et dont une autre extrémité est en appui contre ladite portion de corps.

21. Ensemble selon l'une quelconque des revendications précédentes, caractérisé en ce que la portion de corps (7b) articulée sur la structure de support (1) comporte un coussinet de montage sans jeu de l'autre portion de corps (7a) dans cette structure, ce coussinet comportant sur ses faces latérales des moyens (29,30) d'articulation sur les flasques.

22. Ensemble selon la revendication 21, caractérisé en ce que les moyens d'articulation comprennent des parties en saillie (29,30) adaptées pour s'engager dans des canons de pivotement (31,32) des flasques.

23. Ensemble selon la revendication 21 ou 22, caractérisé en ce qu'il est prévu des moyens (35) de mise sous contrainte de l'ensemble structure de support (1) - coussinet (7b) - portion de corps de colonne (7a) associée à la portion d'arbre portant le volant (4a).

24. Ensemble selon la revendication 23, caractérisé en ce que les moyens de mise sous contrainte comprennent une vis (35) de rapprochement des flasques.

## Claims

1. Adjustable steering column assembly, in particular for an automobile vehicle, of the type comprising a support structure for the column (1) provided with two lateral flanges (2, 3) approximately vertical, a steering shaft (4) having two parts (4a, 4b), the one (4a) of which supports the steering wheel and the other (4b) is connected to the remainder (5) of the steering mechanism of the vehicle, which parts are mounted telescopically in one another to allow the adjustment of the axial position of the wheel, this shaft (4) being mounted in a rotating manner in a body of the column (7) which is capable of pivoting about a shaft (X-X) approximately horizontal between the two flanges of the support structure (1) to permit the adjustment of the angular position of the steering wheel, this body comprising two parts (7a, 7b) which are displaceable in a sliding manner in one another, of which one (7a) comprises means (8, 9) for rotatably guiding and resisting axial movement of the part of the shaft (4a) bearing the steering wheel, and of which the other (7b) is pivoted between the flanges (2, 3) of the support structure and the means of adjusting the position comprise an electric geared motor (11) for adjusting the angular position of the steering wheel and an electric geared motor (10) for adjusting the axial position of the wheel, adapted to cooperate on the one hand with the support structure (1) and on the other hand, with the part of the body (7a) associated to the part of the shaft (4a) bearing the steering wheel, to control the angular and axial positions of the wheel, characterised in that the adjusting means comprise, furthermore, a suspension structure (14) of said part of the body (7a) associated with the part of the shaft (4a) bearing the steering wheel, pivoted about an axis which is approximately horizontal on the support structure (1) and can be displaced in an angular manner under the control of displacement means (15) cooperating with the electric geared motor (11) for adjusting the angular position of the steering wheel, to regulate the angle or position of the part of the body associated with the position of the shaft supporting the steering wheel, this part of the body (7a) and this suspension structure (14) being displaceable in an angular manner and/or in translation in relation to one another, to permit an angular and/or axial adjustment of the position of the corresponding part of the body and thus of the steering wheel by actuation of one and/or the other of said geared motors.

2. Assembly according to Claim 1, characterised in that the suspension structure (14) is pivoted on at least one of the flanges (2, 3) of the support structure.

3. Assembly according to Claim 2, characterised in that the suspension structure (14) comprises at least one suspension arm (14a) pivoted on said flange (3) and provided with a suspension member (16) of the corresponding part of the body (7a).

4. Assembly according to Claim 2 or Claim 3, characterised in that the suspension structure comprises a mounting which is substantially U-shaped (14) having two manoeuvring arms (14a, 14b) connected to a manoeuvring rod (14c) pivoted between the two flanges (2, 3) of the support structure, each manoeuvring arm comprising a suspension member (16, 17) of the corresponding part of the body.

5. Assembly according to either one of Claims 3 and 4, characterised in that each suspension member (16, 17) is mounted in a sliding manner in a slot (18) of a corresponding part of the body.

6. Assembly according to Claim 4 or Claim 5, characterised in that the suspension members (16, 17) of the manoeuvring arms are formed by a suspension rod extending between the arms and mounted in a sliding manner in the same slot of the corresponding part of the body (7a).

7. Assembly according to any one of the preceding claims, characterised in that the suspension structure is disposed between the support structure (1) and the corresponding part of the body (7a).

8. Assembly according to Claim 7, characterised in that the geared motor (11) for adjusting the angular position is secured on the face of a flange (3), opposite that which is opposite the body, and in that a part of the displacement means passes through the corresponding flange.

9. Assembly according to any one of the preceding claims, characterised in that the displacement means comprise an output pinion (11a) of the geared motor (11), adapted to cooperate with a toothed crown part (20) for the angular displacement of the suspension structure (14).

10. Assembly according to Claims 3, 4, 5 or 6 and 9, characterised in that the toothed crown part (20) is provided at the end of the manoeuvring arm or one of the manoeuvring arms (14a).

11. Assembly according to any one of the preceding claims, characterised in that the geared motor (11) for adapting the angular position of the steering wheel is secured on one of the flanges (3), whereas the geared motor (10) for adjusting the axial position of the steering wheel is secured opposite, on another flange (2) of the support structure.

12. Assembly according to Claim 11, characterised in that the geared motor (10) for adjusting the axial position of the steering wheel is fixed on the surface of the corresponding flange, opposite that which is opposite the body; and in that the adjusting means of the axial position of the steering wheel comprises an output pinion (10a) of the geared motor (10), projecting on the surface of the corresponding flange, opposite that on which the geared motor is secured, and adapted to cooperate with a rack (21) which is pivoted about this pinion (10a) disposed between the corresponding flange (2) and the corresponding part of the body (7a) and connected to this part of the body, to permit the axial position thereof, and thus that of the steering wheel, to be adjusted.

13. Assembly according to any one of the preceding claims, characterised in that the geared motors (10, 11) for adjusting the angular and axial positions of the steering wheel are disposed in the vicinity of the end of the flanges which is closest to the steering wheel, the body of the column being pivoted in the vicinity of the other end of the flanges (2, 3); and in that the flanges (2, 3) comprise, between their two ends, means (12, 13) for absorbing impact energy.

14. Assembly according to Claim 13, characterised in that the means for absorbing impact energy comprise deformation zones (12, 13), preferably of the flanges.

15. Assembly according to Claim 13 or Claim 14, characterised in that the body of the column (7) comprises means for absorbing impact energy.

16. Assembly according to Claim 15, characterised in that the means for absorbing impact energy of the body are formed by two sections (at 7c) telescoping by force into one another in the part of the body (7a) associated with the part of the shaft bearing the steering wheel.

17. Assembly according to any one of the preceding claims, characterised in that it comprises means for bringing the part (7a) of the body of the column associated with the part of the shaft bearing the wheel (4a) under stress in the structure of the support (1), to take up the assembly and operating plays.

18. Assembly according to Claim 17, characterised in that the means for bringing under stress comprise resilient means (22) interposed between the upper part of the support structure (1) and this part of the body (7a).

19. Assembly according to Claim 17 or 18, characterised in that the means for bringing under stress comprise runners (25, 26) for guiding this part of the body, bearing under stress against the flanges (2, 3) of the structure of the support, by means of resilient means (28).

20. Assembly according to Claim 19, characterised in that the guide runners (25, 26) are disposed at the end of a threaded rod (24) connected to said part of the body and on which there is provided a nut (27) bringing a spring (28) under stress, one end of which spring bears on this nut and the other end of which bears against said part of the body.

21. Assembly according to any one of the preceding claims, characterised in that the part of the body (7b) pivoted on the support structure (1) comprises a bearing for mounting, without play, the other part of the body (7a) in this structure, this bearing comprising, on its lateral surfaces, means (29, 30) for pivoting on the flanges.

22. Assembly according to Claim 21, characterised in that the pivoting means comprise projecting parts (29, 30) adapted to engage in the pivoting barrels (31, 32) of the flanges.

23. Assembly according to Claim 21 or Claim 22, characterised in that means (35) are provided for stressing the support structure assembly (1) - bearing (7b) - part of the body of the column (7a) associated with the part of the shaft bearing the steering wheel (4a).

24. Assembly according to Claim 23, characterised in that the stressing means comprises a screw (35) for drawing the flanges closer together.

## Patentansprüche

1. Einstellbare Lenksäuleneinheit insbesondere für Kraftfahrzeug, umfassend eine Säulentragstruktur (1), die mit zwei ungefähr vertikalen seitlichen Wangen (2, 3) versehen ist, eine Lenkwelle (4), die zwei Abschnitte (4a, 4b) aufweist, deren einer (4a) das Lenkrad trägt und deren anderer (4b) mit dem Rest (5) des Lenkmechanismus des Fahrzeugs verbunden ist und die teleskopisch ineinander montiert sind, um die Einstellung der axialen Stellung des Lenkrads zu gestatten, wobei diese Welle (4) in einem Säulenkörper (7) drehbar montiert ist, der um eine ungefähr horizontale Achse (X-X) zwischen den beiden Wangen der Tragstruktur (1) verschwenkbar ist, um die Einstellung der Winkelstellung des Lenkrads zu gestatten, wobei dieser Körper zwei Abschnitte (7a, 7b) aufweist, die ineinander gleitend beweglich sind, von denen der eine (7a) Mittel (8, 9) zur Führung bezüglich Drehung und zur axialen Blockierung des das Lenkrad tragenden Wellenabschnitts (4a) aufweist und deren anderer (7b) zwischen den Wangen (2, 3) der Tragstruktur und Einstellmitteln gelenkig gelagert ist, die einen elektrischen Getriebemotor (11) zur Einstellung der Winkelstellung des Lenkrads und einen elektrischen Getriebemotor (10) zur Einstellung der axialen Stellung des Lenkrads aufweisen und so ausgelegt sind, daß sie einerseits mit der Tragstruktur (1) und andererseits mit dem Abschnitt des Körpers (7a) zusammenwirken, der dem das Lenkrad tragenden Wellenabschnitt (4a) zugeordnet ist, um die Winkelstellung und die axiale Stellung des Senkrads einzustellen, dadurch gekennzeichnet, daß die Einstellmittel außerdem eine Struktur (14) zur Aufhängung dieses Körperabschnitts (7a), der dem das Lenkrad tragenden Wellenabschnitt (4a) zugeordnet ist, aufweisen, die um eine ungefähr horizontale Achse an der Tragstruktur (1) angelenkt ist und winkelmäßig unter der Steuerung von Bewegungsmitteln (15) beweglich ist, die mit dem elektrischen Getriebemotor (11) zur Einstellung der Winkelstellung des Senkrads zusammenwirken, um die Winkelstellung des Körperabschnitts einzustellen, der dem das Lenkrad tragenden Wellenabschnitt zugeordnet ist, wobei dieser Körperabschnitt (7a) und diese Aufhängungsstruktur (14) winkelmäßig und/oder in Translation in Bezug aufeinander beweglich sind, um eine Winkeleinstellung und/oder axiale Einstellung der Stellung des entsprechenden Abschnitts des Körpers und damit des Lenkrads durch Aktivierung des einen und/oder des anderen dieser Getriebemotoren zu gestatten.

2. Einheit nach Anspruch 1, dadurch gekennzeichnet, daß die Aufhängungsstruktur (14) an mindestens einer der Wangen (2, 3) der Tragstruktur gelenkig gelagert ist.

3. Einheit nach Anspruch 2, dadurch gekennzeichnet, daß die Tragstruktur (14) mindestens einen Aufhängungsarm (14a) besitzt, der an dieser Wange (3) gelenkig gelagert ist und mit einem Organ (16) zur Aufhängung des entsprechenden Abschnitts (7a) des Körpers versehen ist.

4. Einheit nach Anspruch 2 oder 3, dadurch gekennzeichnet, daß die Aufhängungsstruktur einen allgemein U-förmigen Halter (14) aufweist, der zwei Betätigungsarme (14a, 14b) besitzt, die mit einer Betätigungsstange (14c) verbunden sind, die zwischen den beiden Wangen (2, 3) der Tragstruktur gelenkig gelagert sind, wobei jeder Betätigungsarm ein Organ (16, 17) zur Aufhängung des entsprechenden Abschnitts des Körpers besitzt.

5. Einheit nach einem der Ansprüche 3 oder 4, dadurch gekennzeichnet, daß das oder jedes Aufhängungsorgan (16, 17) in einem Langloch (18) des entsprechenden Abschnitts des Körpers verschiebbar montiert ist.

6. Einheit nach Anspruch 4 oder 5, dadurch gekennzeichnet, daß die Aufhängungsorgane (16, 17) der Betätigungsarme von einer Aufhängungsstange gebildet sind, die sich zwischen den Armen erstrecken und in demselben Langloch des entsprechenden Abschnitts (7a) des Körpers verschiebbar montiert ist.

7. Einheit nach einem der vorhergehenden Ansprüche, dadurch gekennzeichnet, daß die Aufhängungsstruktur zwischen der Tragstruktur (1) und dem entsprechenden Abschnitt des Körpers (7a) angeordnet ist.

8. Einheit nach Anspruch 7, dadurch gekennzeichnet, daß der Getriebemotor (11) zur Einstellung der Winkelstellung an der Seite einer Wange (3) befestigt ist, die der dem Körper zugewandten entgegengesetzt ist, und daß ein Abschnitt der Bewegungsmittel die entsprechende Wange durchquert.

9. Einheit nach einem der vorhergehenden Ansprüche, dadurch gekennzeichnet, daß die Bewegungsmittel ein Ausgangszahnrad (11a) des Getriebemotors (11) umfassen, das so ausgelegt ist, daß es mit einem Zahnkranzabschnitt (20) zur Winkelbewegung der Aufhängungsstruktur (14) zusammenwirkt.

10. Einheit nach Anspruch 3, 4, 5 oder 6 und 9, dadurch gekennzeichnet, daß der Zahnkranzabschnitt 20 am Ende des oder eines der Betätigungsarme (14a) vorgesehen ist.

11. Einheit nach einem der vorhergehenden Ansprüche, dadurch gekennzeichnet, daß der Getriebemotor (11) zur Einstellung der Winkelstellung des Lenkrads an einer der Wangen (3) befestigt ist, während der Getriebemotor (10) zur Einstellung der axialen Stellung des Lenkrads gegenüber auf der anderen Wange (2) der Tragstruktur befestigt ist.

12. Einheit nach Anspruch 11, dadurch gekennzeichnet, daß der Getriebemotor (10) zur Einstellung der axialen Stellung des Lenkrads an der Seite der entsprechenden Wange befestigt ist, die der dem Körper zugewandten entgegengesetzt ist, und daß die Mittel zur Einstellung der axialen Stellung des Lenkrads ein Ausgangszahnrad (10a) des Getriebemotors (10) umfassen, das an der Seite der entsprechenden Wange hervorsteht, die derjenigen entgegengesetzt ist, an welcher der Getriebemotor befestigt ist, und das so ausgelegt ist, daß es mit einer um dieses Zahnrad (10a) schwenkbar gelagerten Zahnstange (21) zusammenwirkt, die zwischen der entsprechenden Wange (2) und dem entsprechenden Körperabschnitt (7a) angeordnet ist und mit diesem Körperabschnitt verbunden ist, um die Einstellung der axialen Stellung dieses Körperabschnitts und damit des Lenkrads zu gestatten.

13. Einheit nach einem der vorhergehenden Ansprüche, dadurch gekennzeichnet, daß die Getriebemotoren (10, 11) zur Einstellung der Winkelstellung und der axialen Stellung des Lenkrads in Nähe des dem Lenkrad am nächsten gelegenen Endes der Wangen angeordnet sind, wobei der Säulenkörper in Nähe des anderen Endes der Wangen (2, 3) gelenkig gelagert ist, und daß diese Wangen (2, 3) zwischen ihren beiden Enden Mittel (12, 13) zur Absorption von Stoßenergie aufweisen.

14. Einheit nach Anspruch 13, dadurch gekennzeichnet, daß die Mittel zur Absorption von Stoßenergie Bereiche (12, 13) der bevorzugten Verformung dieser Wangen aufweisen.

15. Einheit nach Anspruch 13 oder 14, dadurch gekennzeichnet, daß der Säulenkörper (7) Mittel zur Absorption von Stoßenergie besitzt.

16. Einheit nach Anspruch 15, dadurch gekennzeichnet daß die Mittel zur Absorption von Stoßenergie des Körpers aus zwei (bei 7c) unter Kraft ineinander teleskopischen Abschnitten des Körperabschnitts (7a) bestehen, der dem das Lenkrad tragenden Wellenabschnitt zugeordnet ist.

17. Einheit nach einem der vorhergehenden Ansprüche, dadurch gekennzeichnet, daß sie in der Tragstruktur (1) Mittel zur Belastung des Säulenkörperabschnitts (7a) besitzt, der dem das Lenkrad tragenden Wellenabschnitt (4a) zugeordnet ist, um die Montage- und Betriebsspiele auszugleichen.

18. Einheit nach Anspruch 17, dadurch gekennzeichnet, daß die Belastungsmittel aus elastischen Mitteln (22) bestehen, die zwischen den oberen Teil der Tragstruktur (1) und diesem Körperabschnitt (7a) eingesetzt sind.

19. Einheit nach Anspruch 17 oder 18, dadurch gekennzeichnet, daß die Belastungsmittel Kufen (25, 26) zur Führung dieses Körperabschnitts umfassen, die über elastische Mittel (28) an die Wangen (2, 3) der Tragstruktur angedrückt sind.

20. Einheit nach Anspruch 19, dadurch gekennzeichnet, daß die Führungskufen (25, 26) an den Enden einer Gewindestange (24) angeordnet sind, die mit diesem Körperabschnitt verbunden ist und auf der eine Mutter (27) zur Belastung einer Feder (28) vorgesehen ist, deren eines Ende sich an dieser Mutter abstützt und deren anderes Ende sich an diesem Körperabschnitt abstützt.

21. Einheit nach einem der vorhergehenden Ansprüche, dadurch gekennzeichnet, daß der an der Tragstruktur (1) gelenkig gelagerte Körperabschnitt (7b) ein Lager zur spielfreien Montage des anderen Körperabschnitts (7a) in dieser Struktur besitzt, wobei dieses Lager auf seinen beiden seitlichen Flächen Mittel (29, 30) zur gelenkigen Lagerung in den Wangen besitzt.

22. Einheit nach Anspruch 21, dadurch gekennzeichnet, daß die Mittel zur gelenkigen Lagerung hervorstehende Teile (29, 30) aufweisen, die so ausgelegt sind, daß sie in Lagerstutzen (31, 32) der Wangen eintreten.

23. Einheit nach Anspruch 21 oder 22, dadurch gekennzeichnet, daß Mittel (35) zur Belastung der Einheit Tragstruktur (1) - Lager (7b) - Säulenkörperabschnitt (7a), der dem das Lenkrad tragenden Wellenabschnitt (4a) zugeordnet ist, vorgesehen ist.

24. Einheit nach Anspruch 23, dadurch gekennzeichnet, daß die Mittel zur Belastung eine Schraube (35) zur Annäherung der Wangen umfassen.
